# EUROPÄISCHE PATENTSCHRIFT

(11) **EP 2 775 833 B1**
(45) Veröffentlichungstag und Bekanntmachung des Hinweises auf die Patenterteilung: **04.10.2017**
(21) Anmeldenummer: 12780202.3
(22) Anmeldetag: 02.11.2012
(51) Int. Cl.: A01N 33/12, A01N 57/20, A01N 57/34

(54) **VERWENDUNG VON IONISCHEN VERBINDUNGEN ZUR BEKÄMPFUNG VON GLYPHOSAT-RESISTENTEN PFLANZEN**
USE OF IONIC COMPOUNDS FOR CONTROLLING GLYPHOSATE RESISTENT PLANTS
UTILISATION DE COMPOSÉS IONIQUES POUR CONTRÔLER DES PLANTES RÉSISTANTES À GLYPHOSATE

(30) Priorität: 07.11.2011 EP 11188123
(43) Veröffentlichungstag der Anmeldung: 17.09.2014
(73) Patentinhaber: Bayer Intellectual Property GmbH, 40789 Monheim (DE)
(72) Erfinder: TEMMING, Kai, 51375 Leverkusen (DE); DUFF, Daniel-Gordon, 51373 Leverkusen (DE); VERMEER, Ronald, 40789 Monheim am Rhein (DE)
(74) Vertreter: BIP Patents
(86) Internationale Anmeldenummer: PCT/EP2012/071697
(87) Internationale Veröffentlichungsnummer: WO 2013/068302

(56) Entgegenhaltungen:
- EP-A1- 0 124 351
- WO-A1-2008/140338
- WO-A2-2012/006313
- US-A1- 2008 207 452

## Beschreibung

Die vorliegende Erfindung betrifft die Verwendung von ionischen Verbindungen zur Bekämpfung von Glyphosat-resistente Pflanzen.

WO-A-2007/0446693 beschreibt die Herstellung von ionischen Flüssigkeiten bei denen ein agrochemischer Wirkstoff als Ion eingesetzt wird.

US-A-2008/0207452 beschreibt die Herstellung von ionischen Flüssigkeiten aus Carboxylsäure-Herbiziden wie z.B. 2,4-D und Heteroarylaminen oder Trialkylaminen. Die Zielsetzung der Erfinder war es eine ionischen Flüssigkeit zur Verfügung zu stellen, welches mindestens so aktiv wie kommerziell verfügbare herbizide Mittel basierend auf carbonsäurehaltigen Herbiziden ist. Darüberhinaus sollen die ionische Flüssigkeiten jedoch weniger volatil sein um zu verhindern, dass benachbarte empfindliche Pflanzen beschädigt werden.

EP 0 124 351 A1 beschreibt Ammonium Salze von Glyphosat jedoch nicht ihre Verwendung gegen Glyphosat-resistente Unkräuter.

Es wurde nun gefunden, dass ionische Verbindungen, gekennzeichnet durch einen Gehalt an
A) einer Verbindung der Formel (I) sowie 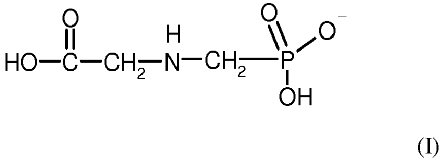
B) Tri(C₆-C₁₄-alkyl)C₁-C₈-alkylammonium und/oder Tri(C₆-C₁₄-alkyl)C₁-C₈-alkylphosphonium zur Bekämpfung von Glyphosat-resistenten Pflanzen geeignet sind.

Glyphosat ist als Wirkstoff bekannt und wurde bereits seit 70er Jahren von der Firma Monsanto unter dem Handelsnamen Roundup ^{®} vertrieben. Glyphosat liegt in den erfindungsgemäß verwendeten ionischen Verbindungen als Anion vor.

Eine weitere Komponente der erfindungsgemäß verwendeten ionischen Verbindungen ist/sind Tri(C₆-C₁₄alkyl)C₁-C₈-alkylammonium und/oder Tri(C₆-C₁₄-alkyl)C₁-C₈-alkylphosphonium. Der Begriff "Alkyl" steht dabei für einen gesättigten, geradkettigen oder verzweigte (bevorzugt geradkettigen) Kohlenwasserstoffrest mit den jeweils angegebenen Anzahl an Kohlenstoffatomen, z.B. (aber nicht beschränkt auf) Methyl, Ethyl, Propyl, 1-Methylethyl, Butyl, 1-Methyl-propyl, 2-Methylpropyl, 1,1-Dimethylethyl, Pentyl, 1-Methylbutyl, 2-Methylbutyl, 3-Methylbutyl, 2,2-Di-methylpropyl, 1-Ethylpropyl, Hexyl, 1,1-Dimethylpropyl, 1,2-Dimethylpropyl,1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-Methylpropyl, 1-Ethyl-2-methylpropyl, Heptyl, Octyl, Nonyl, Decyl etc.

In einer bevorzugten Ausführungsform der Erfindung enthalten die erfindungsgemäß verwendeten ionischen Verbindungen Tri(C₈-C₁₀-alkyl)C₁-C₃-alkylammonium und/oder Tri(C₈-C₁₀-alkyl)C₁-C₃-alkylphosphonium. Weiter bevorzugt enthalten die ionischen Verbindungen Tri(C₈-C₁₀-alkyl)methylammonium und/oder Tri(C₈-C₁₀-alkyl)methylphosphonium. Besonders bevorzugt enthalten erfindungsgemäß verwendete ionischen Verbindungen Trioctylmethylammonium, Tricaprylylmethylammonium, Trioctylmethylphosphonium und/oder Tricaprylylmethylphosphonium. Der Begriff "-caprylyl-" bezeichnet dabei das Vorhandensein eines Gemisches aus C₈-C₁₀-Alkyl (in einem Molekül). Am meisten bevorzugt ist die Verwendung von Trioctylmethylammonium und/oder Trioctylmethylphosphonium.

Überraschenderweise ist die Wirksamkeit der erfindungsgemäß verwendeten ionischen Verbindungen mit einer Verbindung der Formel (I) sowie Tri(C₆-C₁₄-alkyl)C₁-C₈-alkylammonium und/oder Tri(C₆-C₁₄-alkyl)C₁-C₈-alkylphosphonium beim Einsatz gegen Pflanzen wesentlich höher als die Wirkungen von bekannten Glyphosat-Formulierungen. Darüberhinaus wurde festgestellt, dass die oben beschriebenen ionischen Verbindungen auch gegen Glyphosat-resistente Pflanzen wirksam sind. Es wurde auch festgestellt, dass die oben beschriebenen ionischen Verbindungen im Vergleich zu herkömmlichen Glyphosat-Formulierungen gegenüber einem weiteren Spektrum von Pflanzen wirken. Die oben beschriebenen ionischen Verbindungen zeichnen sich durch bessere Blattbenetzung, schnellere Blattpenetration und schnelleren Wirkeintritt als herkömmliche Glyphosat-Formulierungen aus.

Die Gewichtsverhältnisse der erfindungsgemäß einzusetzenden Komponenten (A) zu (B) können in weiten Bereichen von 1 : 50 bis 50 : 1 variiert werden. Vorzugsweise ist das Gewichtsverhältnis im Bereich von 1 : 10 bis 10 : 1, insbesondere im Bereich von 1 : 5 bis 5 : 1. Optimale Gewichtsverhältnisse können vom jeweiligen Applikationsgebiet, Unkrautspektrum und der eingesetzten carbonsäurehaltigen herbiziden Wirkstoffen abhängen und in Vorversuchen bestimmt werden. Auch das Molekulargewicht der Komponente B spielt eine Rolle.

Bei den erfindungsgemäß verwendeten ionischen Verbindungen liegt
das Gewichtsverhältnis von der Verbindung gemäß Formel (I) zu Tri(C₆-C₁₄-alkyl)C₁-C₈-alkylammonium und/oder Tri(C₆-C₁₄-alkyl)C₁-C₈-alkylphosphonium vorzugsweise zwischen 1 : 10 und 10 : 1, vorzugswer 1 : 5 und 5 : 1 und noch bevorzugter zwischen 33 : 67 und 28 zu 72.

Die erfindungsgemäß verwendeten ionischen Verbindungen besitzen sehr gute herbizide Eigenschaften und lassen sich zur Bekämpfung von Pflanzen verwenden. Unter Pflanzen sind hierbei alle Pflanzen zu verstehen, die an Orten wachsen, wo sie unerwünscht sind (z.B. Schadpflanzen wie monokotyle oder dikotyle Unkräuter und/oder unerwünsche Kulturpflanzen wie z.B. Mais, Raps, etc.), nachfolgend auch allgemein als Unkräuter bezeichnet.

Die erfindungsgemäßen ionischen Verbindungen können z.B. bei den folgenden Glyphosat-resistente Pflanzen verwendet werden:
Monokotyle Unkräuter der Gattungen: Echinochloa, Eriochloa, Setaria, Panicum, Digitaria, Phleum, Poa, Festuca, Eleusine, Brachiaria, Lolium, Bromus, Avena, Cyperus, Sorghum, Agropyron, Cynodon, Monochoria, Fimbristylis, Sagittaria, Eleocharis, Scirpus, Paspalum, Ischaemum, Dactyloctenium, Agrostis, Alopecurus, Apera, Aegilops, Phalaris.

Dikotyle Unkräuter der Gattungen: Cassia, Sinapis, Lepidium, Galium, Stellaria, Matricaria, Anthemis, Galinsoga, Chenopodium, Urtica, Senecio, Amaranthus, Portulaca, Xanthium, Convolvulus, Ipomoea, Polygonum, Sesbania, Ambrosia, Cirsium, Carduus, Sonchus, Solanum, Rorippa, Rotala, Lindernia, Lamium, Veronica, Abutilon, Emex, Datura, Viola, Galeopsis, Papaver, Centaurea, Trifolium, Ranunculus, Sphenoclea, Taraxacum, Plantago, Epilobium, Rubus.

Bevorzugt lassen sich die oben beschriebenen ionischen Verbindungen als Totalherbizide zur Bekämpfung von Glyphosat-resistenten Unkräutern einsetzen, z.B. auf Wegen, Plätzen, Gleisanlagen usw. Die oben beschriebenen ionischen Verbindungen zeichnen sich durch eine besonders schnell einsetzende und lange anhaltende Wirkung aus. Der Begriff "Glyphosat-resistent Pflanzen/Unkräuter" bezieht sich dabei auf Pflanzen, die gegenüber herkömmlichen Glyphosat Formulierungen wie Roundup ^{®} keine Wirkung mehr zeigen.

Die Herstellung erfindungsgemäß verwendeter ionischer Verbindungen erfolgt durch Reaktion von Glyphosat in einem polaren Lösungmittel mit einem Salz enthaltend Tri(C₆-C₁₄-alkyl)C₁-C₈-alkylammonium und/oder Tri(C₆-C₁₄-alkyl)C₁-C₈-alkylphosphonium. Das Salz enthält neben Tri(C₆-C₁₄-alkyl)C₁-C₈-alkylammonium und/oder Tri(C₆-C₁₄-alkyl)C₁-C₈-alkylphosphonium auch ein Anion. Nach der Reaktion kann das Reaktionsprodukt nach bekannten Methoden aufgereinigt (z.B. Abtrennung vom Lösungsmittel; der anionischen Abgangsgruppe falls notwendig) bzw. weiterverarbeitet werden. Die für das Herstellverfahren verwendeten polaren Lösungsmittel sind vorzugsweise protische Lösungsmittel und können beispielsweise ausgewählt werden aus der Gruppe von Wasser, Methanol, Ethanol, und andere Alkohole, primäre und sekundäre Amine, Carbonsäuren, primäre und sekundäre Amide etc. Anionen von Tri(C₆-C₁₄-alkyl)C₁-C₈-alkylammonium und/oder Tri(C₆-C₁₄-alkyl)C₁-C₈-alkylphosphonium können beispielsweise ausgewählt werden aus der Gruppe von Carbonaten, Sulfaten, Phosphaten, Nitraten etc. Vorzugsweise wird für die Herstellung Methylcarbonat verwendet.

In den erfindungsgemäß verwendeten herbiziden Mittel benötigt man in der Regel

Aufwandmengen im Bereich von 500 bis 2000 g, vorzugsweise 1000 bis 1500 g

Säureäquivalente pro Hektar (ai/ha).

Die erfindungsgemäß verwendeten ionischen Verbindungen können auch durch die Verwendung von Ionentauschern hergestellt werden.

Die erfindungsgemäß verwendeten ionischen Verbidungen können in allen Applikationsarten, die für Herbizide üblich sind, eingesetzt werden. Besonders vorteilhaft werden sie in der Spritzapplikation.

Aufgrund ihrer herbiziden Eigenschaften können die oben beschriebenen ionischen Verbindungen auch zur Bekämpfung von Schadpflanzen in Kulturen von gentechnisch oder durch konventionelle Mutagenese veränderten Glyphosat-resistenten Pflanzen eingesetzt werden. Die transgenen Pflanzen zeichnen sich in der Regel durch besondere vorteilhafte Eigenschaften aus, beispielsweise durch Resistenzen gegenüber bestimmten Pestiziden, vor allem bestimmten Herbiziden, Resistenzen gegenüber Pflanzenkrankheiten oder Erregern von Pflanzenkrankheiten wie bestimmten Insekten oder Mikroorganismen wie Pilzen, Bakterien oder Viren. Andere besondere Eigenschaften betreffen z. B. das Erntegut hinsichtlich Menge, Qualität, Lagerfähigkeit, Zusammensetzung und spezieller Inhaltsstoffe. So sind transgene Pflanzen mit erhöhtem Stärkegehalt oder veränderter Qualität der Stärke oder solche mit anderer Fettsäurezusammensetzung des Ernteguts bekannt.

Bevorzugt bezüglich transgener Kulturen ist die Anwendung der oben beschriebenen ionischen Verbindungen in wirtschaftlich bedeutenden transgenen Kulturen von Nutz- und Zierpflanzen, z. B. von Getreide wie Weizen, Gerste, Roggen, Hafer, Hirse, Reis und Mais oder auch Kulturen von Zuckerrübe, Baumwolle, Soja, Raps, Kartoffel, Tomate, Erbse und anderen Gemüsesorten.

Vorzugsweise können die erfindungsgemäß verwendeten ionischen Verbindungen als Herbizide in Nutzpflanzenkulturen eingesetzt werden, welche gegenüber den phytotoxischen Wirkungen der Herbizide resistent sind bzw. gentechnisch resistent gemacht worden sind.

Die erfindungsgemäß verwendeten ionischen Verbindungen können gegebenenfalls mit weiteren üblichen Formulierungshilfsmitteln als herbizide Mittel vorliegen, die dann in üblicher weise mit Wasser verdünnt zur Anwendung gebracht werden, oder als sogenannte Tankmischungen durch gemeinsame Verdünnung der getrennt formulierten oder partiell getrennt formulierten Komponenten mit Wasser hergestellt werden. Die erfindungsgemäß verwendeten ionischen Verbindungen können auf verschiedene Arten formuliert werden, je nachdem welche biologischen und/oder chemischphysikalischen Parameter vorgegeben sind. Als allgemeine Formulierungsmöglichkeiten kommen beispielsweise in Frage: Spritzpulver (WP), emulgierbare Konzentrate (EC), wäßrige Lösungen (SL), Emulsionen (EW) wie Öl-in-Wasser- und Wasser-in-ÖI-Emulsionen, versprühbare Lösungen oder Emulsionen, Dispersionen auf Öl- oder Wasserbasis, Suspoemulsionen, Stäubemittel (DP), Beizmittel, Granulate zur Boden- oder Streuapplikation oder wasserdispergierbare Granulate (WG), ULV-Formulierungen, Mikrokapseln oder Wachse.

Die einzelnen Formulierungstypen sind im Prinzip bekannt und werden beispielsweise beschrieben in: Winnacker-Küchler, "Chemische Technologie", Band 7, C. Hauser Verlag München, 4. Aufl. 1986; van Valkenburg, "Pesticides Formulations", Marcel Dekker N.Y., 1973; K. Martens, "Spray Drying Handbook", 3rd Ed. 1979, G. Goodwin Ltd. London. Die notwendigen Formulierungshilfsmittel wie Inertmaterialien, Tenside, Lösungsmittel und weitere Zusatzstoffe sind ebenfalls bekannt und werden beispielsweise beschrieben in: Watkins, "Handbook of Insecticide Dust Diluents and Carriers", 2nd Ed., Darland Books, Caldwell N.J.; H.v. Olphen, "Introduction to Clay Colloid Chemistry"; 2nd Ed., J. Wiley & Sons, N.Y. Marsden, "Solvente Guide", 2nd Ed., Interscience, N.Y. 1950; McCutcheon's, "Detergents and Emulsifiers Annual", MC Publ. Corp., Ridegewood N.J.; Sisley and Wood, "Encyclopedia of Surface Active Egents", Chem. Publ. Co. Inc., N.Y. 1964; Schönfeldt, "Grenzflächenaktive Äthylenoxidaddukte", Wiss. Verlagsgesellschaft, Stuttgart 1976, Winnacker-Küchler, "Chemische Technologie", Band 7, C. Hauser Verlag München, 4. Aufl. 1986.

Auf der Basis dieser Formulierungen lassen sich auch Kombinationen mit anderen Pestizid wirksamen Stoffen, wie anderen Herbiziden, Fungiziden oder Insektiziden, sowie Safenern, Düngemitteln und/oder Wachstumsregulatoren herstellen, z.B. in Form einer Fertigformulierung oder als Tankmix. Die Erfindung betrifft deshalb auch die Verwendung von einem herbiziden Mittel enthaltend oben beschriebeneionische Verbindungen sowie weitere Formulierungshilfsmittel, andere Pestizid wirksame Stoffe, Safener, Düngemitteln und/oder Wachstumsregulatoren.

Spritzpulver (benetzbare Pulver) sind in Wasser gleichmäßig dispergierbare Präparate, die neben den oben beschriebenen ionischen Verbindungen außer einem Verdünnungs- oder Inertstoff noch Tenside ionischer oder nichtionischer Art (Netzmittel, Dispergiermittel), z.B. polyoxethylierte Alkylphenole, polyethoxylierte Fettalkohole oder -Fettamine, Alkansulfonate oder Alkylbenzolsulfonate, ligninsulfonsaures Natrium, 2,2'- dinaphthylmethan-6,6'-disulfonsaures Natrium, dibutylnaphthalinsulfonsaures Natrium oder auch oleoylmethyltaurinsaures Natrium enthalten.

Emulgierbare Konzentrate werden durch Auflösen der erfindungsgegenständlichen ionischen Verbindungen in einem organischen Lösungsmittel, z.B. Butanol, Cyclohexanon, Dimethylformamid, Xylol oder auch höhersiedenden Aromaten oder Kohlenwasserstoffe unter Zusatz von einem oder mehreren ionischen oder nichtionischen Tensiden (Emulgatoren) hergestellt. Als Emulgatoren können beispielsweise verwendet werden: Alkylarylsulfonsaure Calcium-Salze wie Ca-Dodecylbenzolsulfonat oder nichtionische Emulgatoren wie Fettsäurepolyglykolester, Alkylarylpolyglykolether, Fettalkoholpolyglykolether, Propylenoxid-Ethylenoxid-Kondensationsprodukte, Alkylpolyether, Sorbitanfettsäureester, Polyoxyethylensorbitanfettsäureester oder Polyoxethylensorbitester. Stäubemittel erhält man durch Vermählen des Wirkstoffs mit fein verteilten festen Stoffen, z.B. Talkum, natürlichen Tonen, wie Kaolin, Bentonit und Pyrophyllit, oder Diatomeenerde.

Granulate können entweder durch Verdüsen der oben beschriebenen ionischen Verbindungen auf adsorptionsfähiges, granuliertes Inertmaterial hergestellt werden oder durch Aufbringen von oben beschriebenen ionischen Verbindungen mittels Klebemitteln, z.B. Polyvinylalkohol, polyacrylsaurem Natrium oder auch Mineralölen, auf die Oberfläche von Trägerstoffen wie Sand, Kaolinite oder von granuliertem Inertmaterial. Auch können oben beschriebene ionische Verbindungen in der für die Herstellung von Düngemittelgranulaten üblichen Weise - gewünschtenfalls in Mischung mit Düngemitteln - granuliert werden. Wasserdispergierbare Granulate werden in der Regel nach Verfahren wie Sprühtrocknung, Wirbelbett-Granulierung, Teller-Granulierung, Mischung mit Hochgeschwindigkeitsmischern und Extrusion ohne festes Inertmaterial hergestellt.

Die agrochemischen Zubereitungen enthalten in der Regel 0,1 bis 99 Gewichtsprozent, insbesondere 0,2 bis 95 Gew.-%, der Komponenten (A) und (B), wobei je nach Formulierungsart folgende Konzentrationen üblich sind: In Spritzpulvern beträgt der Anteil der oben beschriebenenionischen Verbindungen z.B. etwa 10 bis 95 Gew.-%, der Rest zu 100 Gew.-% besteht aus üblichen Formulierungsbestandteilen. Bei emulgierbaren Konzentraten kann der Anteil des oben beschriebenenherbiziden Mittels z.B. 5 bis 80 Gew.-%, betragen. Staubförmige Formulierungen enthalten meistens 5 bis 20 Gew.-% der oben beschriebenen ionischen Verbindungen, versprühbare Lösungen etwa 0,2 bis 25 Gew.-% der oben beschriebenen ionischen Verbindungen. Bei Granulaten wie dispergierbaren Granulaten hängt der Gehalt an den oben beschriebenen ionischen Verbindungen zum Teil davon ab, ob die wirksame Verbindung flüssig oder fest vorliegt und welche Granulierhilsmittel und Füllstoffe verwendet werden. In der Regel liegt der Gehalt bei den in Wasser dispergierbaren Granulaten zwischen 10 und 90 Gew.-%. Daneben enthalten die genannten Wirkstofformulierungen gegebenenfalls die jeweils üblichen Haft-, Netz-, Dispergier-, Emulgier-, Konservierungs-, Frostschutz- und Lösungsmittel, Füll-, Farb- und Trägerstoffe, Entschäumer, Verdunstungshemmer und Mittel, die den pH-Wert oder die Viskosität beeinflussen. Zur Anwendung werden die in handelsüblicher Form vorliegenden Formulierungen gegebenenfalls in üblicher weise verdünnt, z.B. bei Spritzpulvern, emulgierbaren Konzentraten, Dispersionen und wasserdispergierbaren Granulaten mittels Wasser. Staubförmige Zubereitungen, Boden- bzw. Streugranulate, sowie versprühbare Lösungen werden vor der Anwendung üblicherweise nicht mehr mit weiteren inerten Stoffen verdünnt.

Die oben beschriebenen ionischen Verbindungen können auf die Pflanzen, Pflanzenteile, Pflanzensamen oder die Anbaufläche (Ackerboden) ausgebracht werden, vorzugsweise auf die grünen Pflanzen und Pflanzenteile und gegebenenfalls zusätzlich auf den Ackerboden. Eine Möglichkeit der Anwendung ist die gemeinsame Ausbringung der oben beschriebenen ionischen Verbindungen in Form von Tankmischungen, wobei die optimal formulierten konzentrierten Formulierungen der Komponenten gemeinsam im Tank mit Wasser gemischt und die erhaltene Spritzbrühe ausgebracht wird.

Die Erfindung wird durch die folgenden Beispiele veranschaulicht.

### Beispiele:

### 1. Herstellung von einer ionischen Verbindung mit Trioctylmethylammonium

Glyphosat (33 g, 0,234 mol) wurde in Methanol (100 mL) suspendiert. Zu dieser Suspension wurde Trioctylmethylammonium methylcarbonat (50 Gew% in MeOH, 207,5 g Lösung, 0,234 mol) unter Wasserbadkühlung langsam zugetropft. Während des Zutropfens wurde eine Gasentwicklung beobachtet (entweichendes CO₂). Nach beendeter Reaktion (6 Stunden bei RT) wurde der pH-Wert kontrolliert und zur Korrektur noch 0,45 g Glyphosat zugegeben. Das Lösungsmittel wurde im Vakuum entfernt. Das hochviskose Rohprodukt wird mit MTBE (50 ml) aufgeschlämmt und gewaschen. Nach Trocknung erhält man das Produkt als viskose Flüssigkeit (Ausbeute: 116,5 g; 96,5%).

### 2. Herbizide Wirksamkeit einer ionischen Verbindung bei 18 Pflanzen/Unkräutern

Analog der Herstellmethode wie in Beispiel 1 beschrieben wurden folgende ionische Verbindungen hergestellt:
1. "Gly-TOMA" (Trioctlymethyl ammonium; 30.9% Glyphosat)
2. "Gly-TOMP" (Trioctylmethyl phosphonium; 29.9% Glyphosat)
3. Kontrolle: "Gly-TMBA" (Trimethylbutyl ammonium; 58.3% Glyphosat)

Zusätzlich wurde die Round up Ultra® Formulierung von Monsanto ("Gly-IPA-RRU") verwendet. Die oben genannten ionischen Verbindungen sowie Round up Ultra® wurden hinsichtlich Ihrer Wirksamkeit auf folgende 18 Pflanzen und Unkräutern: Triticum, Brassica napus, Oryza, Zea mays, Stellaria media, Lolium multiflorum, Veronica arvensis, Juncus gerardii, Anthemis arvensis, Amaranthus retroflexus, Viola tricolor, Avena fatua, Ipomoea violacea, Fallopia convolvulus, Echinochloa crus-galli, Abutilon theophrasti, Cyperus esculentus und Setaria viridis getestet.

Die oben genannte Pflanzen (Amaranthus retroflexus einen Monat alt, die anderen Pflanzen eine Woche alt) wurden in Sprühraum bei 25°C und 60% Luftfeuchtigkeit mit den oben genannten ionischen Verbindungen mit einer Konzentration von 225 L/ha (jeweils 4 g Glyphosatsäure-Äquivalent pro Liter) besprüht. Nach dem Besprühen wurden die Pflanzen in ein Gewächshaus gebracht und gelagert (26/20°C Tag/Nacht und 60% Luftfeuchtigkeit) und nach 1, 6 und 21 Tagen gemäß folgendem Schema untersucht:
0 = kein Schaden
1 = leichter Schaden; leicht welkend
2 = mittlerer Schaden; stark welkend, beginnende Blatteinkräuselung und Farbänderung
3 = starker Schaden, kompletter Turgorverlust, Chlorose, Nekrose

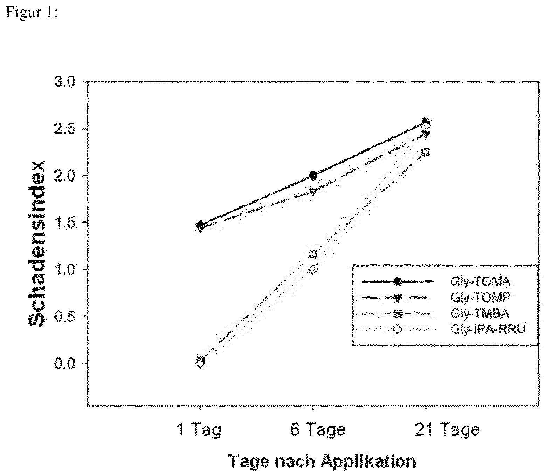

Die Figur 1 zeigt den Durchschnitt der Einstufung über alle 18 Pflanzen (Schadensindex) nach 1, 6 und 21 Tagen. Die ionischen Verbindungen Gly-TOMA und Gly-TOMP zeigen einen sehr schnellen Wirkeintritt. Bereits nach einem Tag sind die Pflanzen leicht bis mittelmässig beschädigt, wohingehend bei Gly-TMBA und Gly-IPA-RRU noch keine Schädigung festgestellt werden kann. In diesem Versuch ergibt sich auch, dass die erfindungsgemäßen ionischen Verbindungen gegenüber einem weiteren Spektrum von den getesteten Plfanzen wirksam ist als Gly-IPA-RRU.

### 3. Herbizide Wirksamkeit erfindungs gemäß verwendeter ionischer Verbindungen bei Glyphosat-resistenten Pflanzen/Unkräutern

Analog der in Beispiel 2 beschrieben Testmethode wurden die ionischen Verbindungen Gly-TOMA, Gly-TOMP (siehe auch Bsp. 2) mit der Round up Ultra® Formulierung Gly-IPA-RRU bei Glyphosatempfindlichem Amaranthus retroflexus und Glyphosat-resistentem Amaranthus retroflexus mit folgendem Ergebnis getestet.

**Tabelle 1:**

| **Ionische Verbindung** | **Pflanze** | **1 Tag** | **6 Tage** | **21 Tage** |
|---|---|---|---|---|
| Gly-TOMA | Glyphosat-resistent | 1,5 | 1,5 | 1,5 |
| | Glyphosat-empfindlich | 1,8 | 2,8 | 3 |
| Gly-TOMP | Glyphosat-resistent | 1,8 | 1,8 | 1,8 |
| | Glyphosat-empfindlich | 2,5 | 3 | 3 |
| Gly-IPA-RRU | Glyphosat-resistent | 0 | 0 | 0 |
| | Glyphosat-empfindlich | 0,3 | 2,8 | 3 |

Während bekannte Round up Ultra® Formulierung Gly-IPA-RRU bei Glyphosat-resistenten Pflanzen keine Wirkung zeigt, zeigen die erfindungsgemäßen ionischen Verbindungen Gly-TOMA, Gly-TOMP gegen Glyphosat-resistente Pflanzen überraschenderweise über den ganzen Beobachtungszeitraum eine Wirksamkeit.

### 4. Blattbenetzung erfindungsgemäße verwendeter ionischer Verbindungen

Die in Beispiel 2 beschriebenen ionischen Verbindungen wurden mit Leitungswasser verdünnt. Ein 5µl-Tropfen dieser Testlösung wurde auf ein Gersten-Blatt appliziert; der Kontaktwinkel des Tropfens zur Blattoberfläche wird über 3 min in regelmäßigen Abständen automatisch bestimmt (Goniometer von Kruess DSA10 MK2). Bei einer üblichen Glyphosatkonzentration von 4g/L in Spritzbrühe zeigt Gly-TOMA ein perfektes Spreiten auf dem Blatt. Bereits nach weniger als einer Sekunde ist der Kontaktwinkel 0° und die Oberfläche perfekt benetzt. Selbst bei geringer Glyphosatkonzentration (1 g/L) sorgt Gly-TOMA stets noch für exzellente Benetzung mit Randwinkeln die bereits nach 5 Sekunden kleiner 10° sind.

Ein ähnlicher Versuch wurde auf Weisskohlblättern durchgeführt mit folgendem Ergebnis:

**Tabelle 2:**

| **Ionische Verbindungen** | **Glyphosat-konzentration [g/L]** | **Randwinkel nach 1 s** | **Randwinkel nach 20 s** |
|---|---|---|---|
| Gly - TOMA | 4 g/L | 27° | 24° |
| Gly - TOMP | 4 g/L | 24° | 20° |
| Gly - TMBA | 4 g/L | 86° | 86° |
| Gly-IPA-RRU | 4 g/L | 91° | 87° |

### 5. Oberflächenspannunge einer Spritzbrühe enthaltend ionische Verbindungen

Die in Beispiel 2 beschriebenen ionischen Verbindungen wurden mit Wasser verdünnt. Danach wurde die Oberflächenspannung dieser Lösungen mit einem Ringtensiometer bestimmt.

**Tabelle 3.**

| Ionische Verbindung | Glyphosatkonzentration [g/L] | Oberflächenspannung [mN/m] |
|---|---|---|
| Gly - TOMA | 4 | 26,9 |
| | 0,5 | 29,1 |
| Gly - TOMP | 4 | 25,5 |
| | 0,5 | 25,6 |
| Gly - TMBA | 4 | 57,3 |
| | 0,5 | 71,5 |

### 6. Blattpenetration ionischer Verbindung im Vergleich zu herkömmlichen Glyphosat-Formulierungen

Gly-TOMA (siehe Beispiel 2) wurde mit der Formulierung Roundup Ultra® bezüglich der Blattpenetration durch enzymatisch isolierte Kutikeln von Apfelbaumblättern verglichen. Verwendet werden Blätter, die in voll entwickeltem Zustand von Apfelbäumen der Sorte Golden Delicious abgeschnitten werden. Die Isolierung der Kutikel erfolgt in der Weise, dass zunächst auf der Unterseite mit Farbstoff markierte und ausgestanzte Blattscheiben mittels Vakuuminfiltration mit einer auf einen pH-Wert zwischen 3 und 4 gepufferten Pectinase-Lösung (0,2 bis 2 %ig) gefüllt werden, dann Natriumazid hinzugefügt wird und die so behandelten Blattscheiben bis zur Auflösung der ursprünglichen Blattstruktur und zur Ablösung der nicht zellulären Kutikula stehen gelassen werden. Danach werden nur die von Spaltöffnungen und Haaren freien Kutikeln der Blattoberseiten weiter verwendet. Sie werden mehrfach abwechselnd mit Wasser und einer Pufferlösung, pH-Wert 7, gewaschen. Die erhaltenen sauberen Kutikel werden schließlich auf Teflonplättchen aufgezogen und mit einem schwachen Luftstrahl geglättet und getrocknet. Im nächsten Schritt werden die so gewonnenen Kutikularmembranen für Membran-Transport-Untersuchungen in Diffusionszellen (=Transportkammern) aus Edelstahl eingelegt. Dazu werden die Kutikeln mit einer Pinzette mittig auf die mit Silikonfett bestrichenen Ränder der Diffusionszellen plaziert und mit einem ebenfalls gefetteten Ring verschlossen. Die Anordnung ist so gewählt, dass die morphologische Außenseite der Kutikeln nach außen, also zur Luft, gerichtet ist, während die ursprüngliche Innenseite dem Inneren der Diffusionszelle zugewandt ist. Die Diffusionszellen sind mit Wasser bzw. mit einem Gemisch aus Wasser und Lösungsmittel gefüllt.

Zur Bestimmung der Penetration werden jeweils 7 µl einer Spritzbrühe (mit einer Glyphosatkonzentration 4 g/L) von Gly-TOMA und Roundup Ultra® auf die Außenseite einer Kutikula appliziert. Die Spritzbrühen werden mit Leitungswasser angesetzt.

Nach dem Auftragen der Spritzbrühen lässt man jeweils das Wasser verdunsten, dreht dann die Kammern um und stellt sie in thermostatisierte Wannen, wobei auf die Außenseite der Kutikula jeweils Luft einer definierten Luftfeuchte und Temperatur geblasen wird. Die einsetzende Penetration findet daher bei einer relativen Luftfeuchtigkeit von 60 % und einer eingestellten Temperatur von 20°C statt. In regelmäßigen Abständen werden mit einer Spritze Proben entnommen und der Gehalt an penetriertem Wirkstoff gemessen.

Beim Apfelbaumblatt zeigte sich nach 24 Stunden, dass Gly-TOMA 50% schneller penetriert als Roundup Ultra®. Nach 48h wurde bereits eine mehr als doppelt so schnelle Penetration beobachtet. Zum Versuchsende (72h) waren 12% Glyphosat aus Gly-TOMA penetriert während nur 5% Glyphosat der Roundup Ultra® Formulierungen penetriert waren.

Bei der Untersuchung der Penetration in das Blatt der Birne Lukas zeigte sich ein ähnliches Resultat. Nach 72 Stunden Inkubationszeit waren über etwa 10% des Glyphosats aus Gly-TOMA penetriert. Demgegenüber standen nur etwa 3,5% des Glyphosats aus der Formulierung mit Roundup Ultra®.

## Patentansprüche

1. Verwendung von ionischen Verbindungen, **gekennzeichnet durch** einen Gehalt an
A) einer Verbindung der Formel (I) 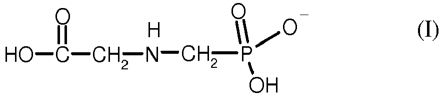 sowie
B) Tri(C₆-C₁₄-alkyl)C₁-C₈-alkylammonium und/oder Tri(C₆-C₁₄-alkyl)C₁-C₈-alkylphosphonium
zur Bekämpfung von Glyphosat-resistenten Unkräutern.

2. Verwendung gemäß Anspruch 1, **dadurch gekennzeichnet, daß** das Gewichtsverhältnis von Wirkstoff der Formel (I) zu Tri(C₆-C₁₄-alkyl)C₁-C₈-alkylammonium und/oder Tri(C₆-C₁₄-alkyl)C₁-C₈-alkylphosphonium zwischen 1 : 5 und 5 : 1.liegt.

3. Verwendung gemäß einem der Ansprüche 1 bis 2, **dadurch gekennzeichnet, daß** Tri(C₆-C₁₄-alkyl)C₁-C₈-alkylammonium und/oder Tri(C₆-C₁₄-alkyl)C₁-C₈-alkylphosphonium ausgewählt ist aus der Gruppe von Tri(C₈-C₁₀-alkyl)methylammonium, Tri(C₈-C₁₀-alkyl)methylphosphonium.

4. Verwendung gemäß Anspruch 3, **dadurch gekennzeichnet, daß** Tri(C₆-C₁₄-alkyl)C₁-C₈-alkylammonium und/oder Tri(C₆-C₁₄-alkyl)C₁-C₈-alkylphosphonium ausgewählt ist aus der Gruppe von Trioctylmethylammonium, Tricaprylylmethylammonium, Trioctylmethylphosphonium, Tricaprylylmethylphosphonium.

5. Verfahren zur Bekämpfung von Glyphosat-resistenten Unkräutern, **dadurch gekennzeichnet, daß** man ionische Verbindungen gemäß einem der Ansprüche 1 bis 4 auf die Glyphosat-resistenten Unkräuter und/oder deren Lebensraum ausbringt.

## Claims

1. Use of ionic compounds, **characterized in that** they comprise
A) a compound of the formula (I) 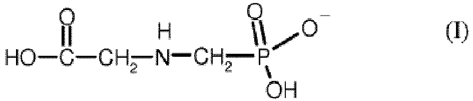 and
B) tri(C₆-C₁₄-alkyl) C₁-C₈-alkyla=onium and/or tri(C₆-C₁₄-alkyl) C₁-C₈-alkylphosphonium
for controlling glyphosate-resistant weeds.

2. Use according to Claim 1, **characterized in that** the weight ratio of active substance of the formula (I) to tri(C₆-C₁₄-alkyl) C₁-C₈-alkylammonium and/or tri(C₆-C₁₄-alkyl)C₁-C₈-alkylphosphonium is between 1:5 and 5:1.

3. Use according to one of Claims 1 to 2, **characterized in that** tri(C₆-C₁₄-alkyl) C₁-C₈-alkylammonium and/or tri(C₆-C₁₄-alkyl) C₁-C₈-alkylphosphonium selected from the group consisting of tri(C₈-C₁₀-alkyl)methylammonium, tri(C₈-C₁₀-alkyl)methylphosphonium.

4. Use according to Claim 3, **characterized in that** tri(C₆-C₁₄-alkyl) C₁-C₈-alkylammonium and/or tri (C₆-C₁₄-alkyl)C₁-C₈-alkylphosphonium is selected from the group consisting of trioctylmethylammonium, tricaprylylmethylammonium, trioctylmethylphosphonium, tricaprylylmethylphosphonium.

5. Process for controlling glyphosate-resistant weeds, **characterized in that** ionic compounds according to one of Claims 1 to 4 are applied to the glyphosate-resistant weeds and/or their environment.

## Revendications

1. Utilisation de composés ioniques, **caractérisée par** une teneur en
A) un composé de formule (I) 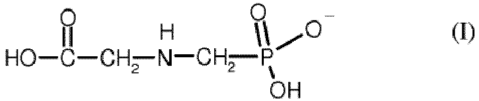 et
B) du tri(alkyle en C₆-C₁₄)alkyle en C₁-C₈-ammonium et/ou du tri(alkyle en C₆-C₁₄)alkyle en C₁-C₈-phosphonium,
pour lutter contre les mauvaises herbes résistantes au glyphosate.

2. Utilisation selon la revendication 1, **caractérisée en ce que** le rapport en poids entre l'agent actif de formule (I) et le tri(alkyle en C₆-C₁₄)alkyle en C₁-C₈-ammonium et/ou le tri(alkyle en C₆-C₁₄)alkyle en C₁-C₈-phosphonium est compris entre 1:5 et 5:1.

3. Utilisation selon l'une quelconque des revendications 1 à 2, **caractérisée en ce que** le tri(alkyle en C₆-C₁₄)alkyle en C₁-C₈-amonium et/ou le tri(alkyle en C₆-C₁₄)alkyle en C₁-C₈-phosphonium sont choisis dans le groupe constitué par le tri(alkyle en C₈-C₁₀)méthylammonium, le tri(alkyle en C₈-C₁₀)méthylphosphonium.

4. Utilisation selon la revendication 3, **caractérisée en ce que** le tri(alkyle en C₆-C₁₄)alkyle en C₁-C₈-ammonium et/ou le tri(alkyle en C₆-C₁₄)alkyle en C₁-C₈-phosphonium sont choisis dans le groupe constitué par le trioctylméthylammonium, le tricaprylylméthylammonium, le trioctylméthylphosphonium, le tricaprylylméthylphosphonium.

5. Procédé de lutte contre les mauvaises herbes résistantes au glyphosate, **caractérisé en ce que** des composés ioniques selon l'une quelconque des revendications 1 à 4 sont appliqués sur les mauvaises herbes résistantes au glyphosate et/ou leur habitat.
